# EUROPÄISCHE PATENTSCHRIFT

(11) **EP 1 448 426 B1**
(45) Veröffentlichungstag und Bekanntmachung des Hinweises auf die Patenterteilung: **13.04.2005**
(21) Anmeldenummer: 02803760.4
(22) Anmeldetag: 04.10.2002
(51) Int. Cl.: B62D 21/11

(54) **MODULARTIGES FAHRGESTELL FÜR NUTZFAHRZEUGE**
MODULAR CHASSIS FOR COMMERCIAL VEHICLES
CHASSIS MODULAIRE DE VEHICULES UTILITAIRES

(30) Priorität: 27.11.2001 DE 10158107
(43) Veröffentlichungstag der Anmeldung: 25.08.2004
(73) Patentinhaber: DaimlerChrysler AG, 70567 Stuttgart (DE)
(72) Erfinder: BECKMANN, Detlev, 73773 Aichwald (DE); GRIMM, Karl-Heinz, 72770 Reutlingen (DE); HAGEMANN, Georg, Stefan, 70327 Stuttgart (DE)
(86) Internationale Anmeldenummer: PCT/EP2002/011147
(87) Internationale Veröffentlichungsnummer: WO 2003/045760

(56) Entgegenhaltungen:
- WO-A-01/23245
- DE-A- 4 234 120
- DE-A- 10 011 417
- DE-A- 19 809 281

## Beschreibung

Die Erfindung betrifft ein modulartig aufgebautes Fahrgestell für Nutzfahrzeuge, insbesondere für Lastkraftwagen, mit den Merkmalen des Oberbegriffs des Anspruchs 1.

Ein Fahrgestell der eingangs genannte Art ist aus der WO 01/23245 A1 bekannt und umfaßt ein Vorderwagengestell sowie ein damit verbundenes Hinterwagengestell. Am Vorderwagengestell ist an jeder Fahrzeugseite eine Einzelradaufhängung mit Feder- und/oder Dämpferbein sowie mit einem oberen Querlenker und einem unteren Querlenker ausgebildet. Das Vorderwagengestell ist aus zwei jeweil einer Fahrzeugseite zugeordneten Seitenkonsolen, einem die beiden Seitenkonsolen oben miteinander verbindenden oberen Querträger und einem die beiden Seitenkonsolen unten miteinander verbindenden unteren Querträger zusammengebaut. Dabei ist jede Seitenkonsole mit dem Hinterwagengestell verbunden, und an jeder Seitenkonsole ist einer der oberen Querlenker gelagert. Die beiden unteren Querlenker sind am unteren Querträger gelagert. Die Seitenkonsole weist in Fahrzeuglängsrichtung hintereinander zwei untere Enden auf, wobei der untere Queträger die vier unteren Enden der beiden Seitenkonsolen miteinander verbindet. Beim bekannten Fahrgestell sind die Feder- und/oder Dämpferbeine jeweils am oberen Querträger abgestützt. Die Anbindung des Vorderwagengestells an das Hinterwagengestell erfolgt über die Seitenkonsolen, die jeweils mit einem einteiligen Längsträger des Hinterwagengestells verbunden sind.

Aus der DE 100 11 417 A1 ist eine Einzelradaufhängung für eine lenkbare Fahrzeugachse bekannt, die radführende Schräglenker besitzt, welche die Räder an Radträgern gelenkig lagern und deren Quer- und Längslenkerarme unterhalb einer durch die Radmitten gehenden Horizontalebene liegen. Dabei sind die Querlenkerarme jeweils länger als die halbe Spurweite ausgestaltet. Zu diesem Zweck sind die jeweils oberen Enden der Radträger über Querlenker aufbauseitig abgestützt, wobei die aufbauseitigen Gelenke der Querlenkerarme und die Gelenke der Querlenker an einem Montagehilfsrahmen gelenkig gelagert sind. Bei der bekannten Einzelradaufhängung ist ein Federund/oder Dämpferbein an einem Ansatz abgestützt, der aus einer Seitenkonsole in Fahrtrichtung ausragt, wobei an dieser Seitenkonsole außerdem der obere Querlenker gelagert ist. Die Lagerstellen des oberen Querlenkers sind nach innen versetzt angeordnet.

Ein anderes Fahrgestell in Modulbauweise ist aus der DE 40 32 823 A1 bekannt und weist ein Vorderwagengestell auf, das zwei parallel zur Fahrzeuglängsrichtung verlaufende Längsträger umfaßt, die über mehrere in Fahrzeuglängsrichtung hintereinander angeordnete Querträger miteinander verbunden sind. Ein mit dem Vorderwagengestell verbundenes Hinterwagengestell trägt einen Aufbau, der in Abhängigkeit des Nutzfahrzeugtyps gestaltet sein kann.

Aus der DE 42 28 314 A1 ist es bekannt, das Fahrgestell aus einem Zentraltragwerk, einem bügelförmigen Vorderrahmen und einem die Aufbauten tragenden Rahmenlängsträgerverband zusammenzubauen. Das Zentraltragwerk umgreift dabei die Antriebsaggregate und ist im wesentlichen im Kernschatten der Vorderräder angeordnet. Dieses Zentraltragwerk besteht im wesentlichen aus einem U-förmig gebogenen Rohr, welches das Antriebsaggregat von unten und seitlich umgreift. Das oben offene U-Rohr ist oberhalb des Antriebsaggregats mit einem sich quer zur Fahrzeuglängsrichtung erstreckenden geradlinigen Rohr geschlossen. An diesen ringförmig geschlossenen Rahmenabschnitt sind seitlich weitere Rohre als Seitenrahmen angeschweißt, an denen der Vorderrahmen angebaut ist. An das U-Rohr des Zentraltragwerks sind Längsträger des Rahmenlängsträgerverbands angeschlossen.

Aus der DE 42 34 120 A1 ist es bekannt, bei einem Nutzfahrzeug, insbesondere bei einem Lastkraftwagen, am Fahrgestell im Frontbereich einen Unterfahrschutz auszubilden. Dieser Unterfahrschutz wird dabei im wesentlichen durch einen relativ tief liegenden unteren Stoßfänger gebildet, dessen Höhe auf die Stoßfängerhöhe von Personenkraftwagen angepaßt ist und der für den Crashfall in hohem Maße energieabsorbierend ausgestaltet ist. Der bekannte Unterfahrschutz ist dadurch realisiert, daß sich die Längsträger des Fahrgestells im Frontbereich in einer Queransicht Y-förmig aufgabeln.

Aus der DE 40 06 418 A1 ist ein Nutzfahrzeug bekannt, dessen Fahrgestell im Frontbereich des Fahrzeugs einen Kühlerträger aufweist, der an Längsträgern des Fahrgestells befestigt ist. An diesem Kühlerträger ist zumindest ein Hauptkühler für den Kühlkreis der Brennkraftmaschine des Fahrzeugs angebracht. Des weiteren können zugehörige Lüftergebläse und weitere Kühler sowie periphere Geräte an diesem Kühlerträger angebracht sein.

Die DE 198 09 281 A1 zeigt ein weiteres Fahrgestell, das im Vorderwagenbereich modulartig aufgebaut ist und an jeder Fahrzeugseite ein Feder- und/oder Dämpferbein besitzt. Die Feder- und/oder Dämpferbeine stützen sich dabei jeweils an einer Seitenkonsole ab, die über einen gemeinsamen unteren Querträger miteinander verbunden sind und jeweils an der Außenseite eines Längsträgers des Fahrgestells befestigt sind.

Die DE 29 30 036 A1 zeigt ein weiteres Fahrgestell mit modulartigem Aufbau, bei dem im Vorderwagenbereich an jeder Fahrzeugseite ein Gehäuse zur Unterbringung eines Federbeins ausgebildet ist, das jeweils an einem Längsträger des Fahrgestells befestigt ist. Die beiden Gehäuse sind außerdem an ihrem oberen Ende über einen gemeinsamen oberen Querträger miteinander verbunden.

Die vorliegende Erfindung beschäftigt sich mit dem Problem, für ein modulartig aufgebautes Fahrgestell der eingangs genannten Art eine verbesserte Ausführungsform anzugeben.

Dieses Problem wird durch ein Fahrgestell mit den Merkmalen des Anspruchs 1 gelöst. Vorteilhafte Ausführungsformen sind Gegenstand der abhängigen Ansprüche.

Die Erfindung beruht auf dem allgemeinen Gedanken, das Vorderwagengestell aus zwei jeweils einer Fahrzeugseite zugeordneten Seitenkonsolen, einem die beiden Seitenkonsolen oben miteinander verbindenden oberen Querträger und einem die. beiden Seitenkonsolen unten miteinander verbindenden unteren Querträger zusammenzubauen, wobei zumindest wesentliche Komponenten der Einzelradaufhängungen an den Seitenkonsolen gelagert bzw. abgestützt sind. Durch diesen Vorschlag kann das Vorderwagengestell besonders steif, insbesondere verwindungssteif, ausgebildet werden. Ein insoweit starres oder steifes Vorderwagengestell kann die Torsionsmomente der Rad- und Federkräfte aufnehmen und die an das Vorderwagengestell angeschlossenen Strukturen, insbesondere das Hinterwagengestell, von diesen Torsionsmomenten freihalten.

Die Herstellbarkeit des Vorderwagengestells kann dadurch vereinfacht werden, daß die Seitenkonsolen und/oder der obere Querträger und/oder der untere Querträger als Blechformteile ausgebildet sind.

Für das Vorderwagengestell kann ein kompakter Aufbau erreicht werden, wenn jede Seitenkonsole eine der anderen Seitenkonsole zugewandte Innenseite aufweist und die oberen Querlenker jeweils an dieser Innenseite der jeweiligen Seitenkonsole gelagert sind und sich durch eine in der Seitenkonsole ausgesparte Öffnung nach außen erstrecken.

Die kompakte Bauweise des Vorderwagengestells wird auch dadurch unterstützt, daß jede Seitenkonsole zwischen ihren unteren Enden eine Ausnehmung aufweist, durch die hindurch sich der jeweilige untere Querlenker und/oder ein Lenkungsantrieb zur Lenkbetätigung der lenkbaren Fahrzeugräder und/oder eine Antriebswelle zum Antrieb antreibbarer Fahrzeugräder erstrecken.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, daß die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein bevorzugtes Ausführungsbeispiel der Erfindung ist in den Zeichnungen dargestellt und wird in der nachfolgenden Beschreibung näher erläutert, wobei sich gleiche Bezugszeichen auf gleiche oder funktional gleiche oder ähnliche Bauteile beziehen.

Es zeigen, jeweils schematisch,
- Fig. 1: eine perspektivische Ansicht auf einen Ausschnitt eines erfindungsgemäßen Fahrgestells im Bereich eines Vorderwagengestells,
- Fig. 2: eine Seitenansicht im Bereich des Vorderwagengestells und
- Fig. 3: eine Ansicht in Fahrzeuglängsrichtung auf das Vorderwagengestell.

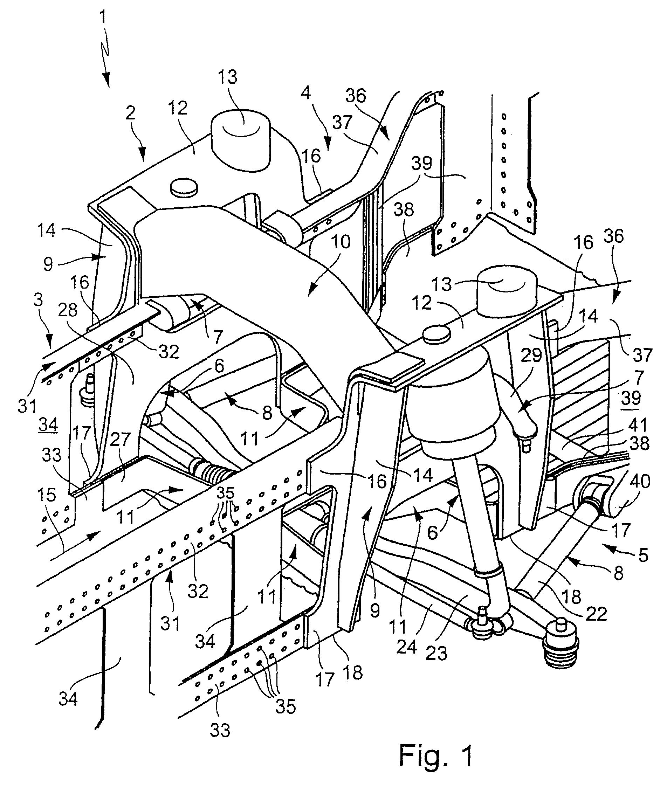

Entsprechend Fig. 1 umfaßt ein nur teilweise dargestelltes Fahrgestell 1 eines Nutzfahrzeugs ein Vorderwagengestell 2 und ein Hinterwagengestell 3. Des weiteren ist hier zusätzlich ein Frontwagengestell 4 vorgesehen. Das Frontwagengestell 4 ist am Vorderwagengestell 2 befestigt, das seinerseits am Hinterwagengestell 3 befestigt ist. Die einzelnen Gestelle 2,3 und 4 sind als Module ausgebildet, so daß sie insbesondere unabhängig voneinander zusammenbaubar sind. Des weiteren ermöglicht die modulare Bauweise insbesondere über normierte Schnittstellen die Kombination unterschiedlicher Ausführungsformen der einzelnen Gestelle 2,3 und 4. Beispielsweise kann das Vorderwagengestell 2 mit unterschiedlichen Hinterwagengestellen 3 kombiniert werden, die sich beispielsweise durch ihre Länge voneinander unterscheiden. Des weiteren kann das Hinterwagengestell hinsichtlich bestimmter Nutzfahrzeugtypen, z.B. Kipper, Sattelzugmaschine oder Pritschenwagen, ausgebildet sein, während bei diesen Nutzfahrzeugtypen das Vorderwagengestell 2 stets identisch aufgebaut sein kann.

Das Vorderwagengestell 2 weist auf jeder Fahrzeugseite eine Einzelradaufhängung 5 auf, die an jeder Fahrzeugseite ein Feder- und/oder Dämpferbein 6, einen oberen Querlenker 7 und einen unteren Querlenker 8 umfassen.

Das Vorderwagengestell 2 besteht aus zwei Seitenkonsolen 9, die jeweils einer Fahrzeugseite zugeordnet sind. Die beiden Seitenkonsolen 9 sind an ihrer Oberseite über einen oberen Querträger 10 und an ihrer Unterseite über einen unteren Querträger 11 miteinander verbunden. Das Vorderwagengestell 2 ist somit aus zumindest diesen vier Einzelteilen 9,10,11 zusammengebaut.

Die Seitenkonsolen 9 sind als Blechformteile ausgebildet und besitzen an ihrem oberen Ende einen Deckabschnitt 12, der nach außen abgewinkelt ist und auskragt. An diesem Deckenabschnitt 12 stützt sich das jeweilige Feder- und/oder Dämpferbein 6 an der zugehörigen Seitenkonsole 9 ab. Des weiteren tragen die Deckenabschnitte 12 oben jeweils ein hinteres Fahrerhauslager 13. Jede Seitenkonsole 9 besitzt zu ihrer Versteifung Seitenwangen 14, die beispielsweise angeschweißt sind und den auskragenden Deckenabschnitt 12 unterstützen. An den Seitenkonsolen 9 sind an einer bezüglich einer durch einen Pfeil 15 symbolisierten Fahrzeuglängsrichtung vorderen Seite sowie an einer hinteren Seite jeweils ein oberer Anschlußflansch 16 und ein unterer Anschlußflansch 17 ausgeformt, über die die Seitenkonsolen 9 mit dem Hinterwagengestell 3 bzw. mit dem Frontwagengestell 4 verbunden sind. Vorzugsweise werden die Anschlußflansche 16 und 17 dabei so ausgestaltet, daß das Vorderwagengestell 2 über Schraubverbindungen mit dem Hinterwagengestell 3 und/oder mit dem Frontwagengestell 4 verbindbar ist.

Die Seitenkonsolen 9 weisen an ihrer Unterseite zwei Enden 18 auf, die in der Fahrzeuglängsrichtung 15 hintereinander angeordnet sind. An diesen unteren Enden 18 sind hier die unteren Anschlußflansche 17 ausgebildet. Von besonderer Bedeutung ist hierbei, daß der untere Querträger 11 an jeder Fahrzeugseite an beiden unteren Enden 18 mit der jeweiligen Seitenkonsole 9 verbunden ist. Hierdurch ergibt sich eine extreme Versteifung des Vorderwagengestells 2, so daß dieses insbesondere eine hohe Verwindungssteifigkeit aufweist. Eine hohe Torsionsfestigkeit ermöglicht es, die im Fahrbetrieb über die Radkräfte und Federkräfte in das Vorderwagengestell 2 eingeleiteten Torsionsmomente aufzunehmen, ohne daß es zu nennenswerten Verwindungen innerhalb des Vorderwagengestells 2 kommt. Hierdurch wird gewährleistet, daß das Hinterwagengestell 3 nicht durch diese Torsionsmomente belastet wird.

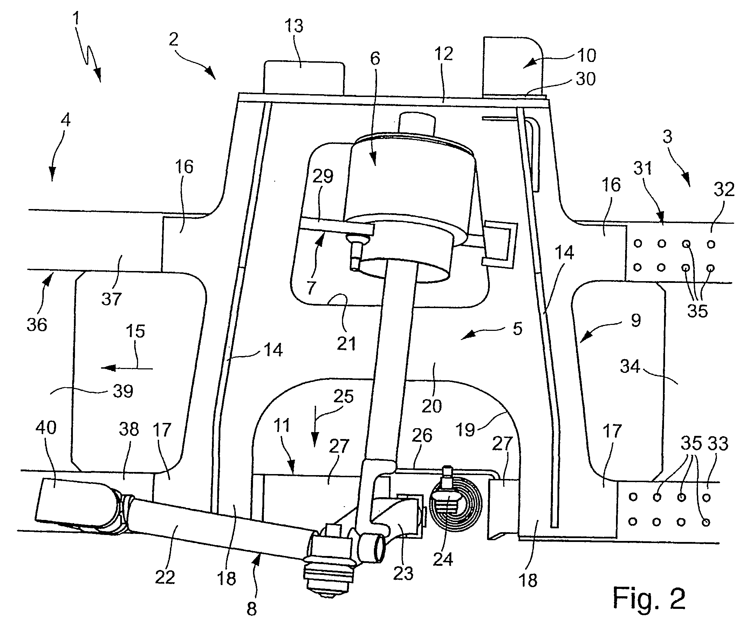

Entsprechend der Seitenansicht gemäß Fig. 2 sind die Seitenkonsolen A-förmig oder wie ein Portal oder wie ein Torbogen geformt und verjüngen sich nach oben. Dementsprechend sind die Seitenkonsolen 9 zumindest in einem unteren Abschnitt nach unten offen U-förmig ausgebildet, so daß die Seitenkonsolen 9 unten, zwischen ihren unteren Enden 18 eine Ausnehmung 19 aufweisen. Außerdem ist in einem oberen Abschnitt, durch einen Steg 20 von der Ausnehmung 19 getrennt, eine Öffnung 21 in der jeweiligen Seitenkonsole 9 ausgebildet.

Wie besonders aus Fig. 2 deutlich wird, erstreckt sich der untere Querträger 11 etwa auf dem Niveau der unteren Enden 18 der Seitenkonsolen 9. Der untere Querlenker 8 ist als Dreiecksquerlenker ausgebildet und besitzt dementsprechend einen vorderen Schenkel 22 sowie einen hinteren Schenkel 23. Während der vordere Schenkel 22 am Frontwagengestell 4 gelagert ist, erfolgt die Lagerung des hinteren Schenkels 23 am unteren Querträger 11. Hierbei erstreckt sich der hintere Schenkel 23 durch die Ausnehmung 19 hindurch. Im vorliegenden Ausführungsbeispiel handelt es sich bei den mit Hilfe der Einzelradaufhängungen 5 am Vorderwagengestell 2 gelagerten und nicht dargestellten Fahrzeugräder um lenkbare Fahrzeugräder. Ein Lenkungsantrieb 24 zur Lenkbetätigung dieser lenkbaren Fahrzeugräder erstreckt sich ebenfalls durch die Ausnehmung 29. Der Lenkungsantrieb 24 kann ebenfalls am unteren Querträger 11 abgestützt und/oder gelagert sein.

Sofern es sich bei den am Vorderwagengestell 2 gelagerten Räder außerdem um antreibbare Räder handelt, kann eine entsprechende Antriebswelle zum Antrieb dieser antreibbaren Fahrzeugräder zweckmäßig so angeordnet werden, daß sie sich ebenfalls durch die Ausnehmung 19 hindurch erstreckt.

Der untere Querträger 11 kann entsprechend einer bevorzugten Ausführungsform in einer in Fig. 2 durch einen Pfeil 25 symbolisierten, von oben nach unten gerichteten Blickrichtung im wesentlichen X-förmig oder H-förmig ausgebildet sein. Dementsprechend besitzt der untere Querträger 11 ein Mittelstück 26, von dem quasi sternförmig vier Arme 27 ausgehen. Während jeder Arm 27 mit einem der unteren Enden 18 der Seitenkonsolen 9 verbunden ist, sind am Mittelstück 26 die hinteren Schenkel 23 der unteren Querlenker 8 gelagert. Auch der untere Querträger 11 ist zweckmäßig als Blechformteil ausgebildet.

Die Seitenkonsolen 9 besitzen einander zugewandte Innenseiten 28 (vgl. Fig. 1). An diesen Innenseiten 28 sind die oberen Querlenker 7 gelagert, wobei sich ein Schenkel 29 des jeweiligen oberen Querlenkers 7 durch die Öffnung 21 hindurch nach außen in Richtung Fahrzeugrad erstreckt. Durch diese Lagerung an der Innenseite 28 kann eine besonders kompakte Bauweise erreicht werden.

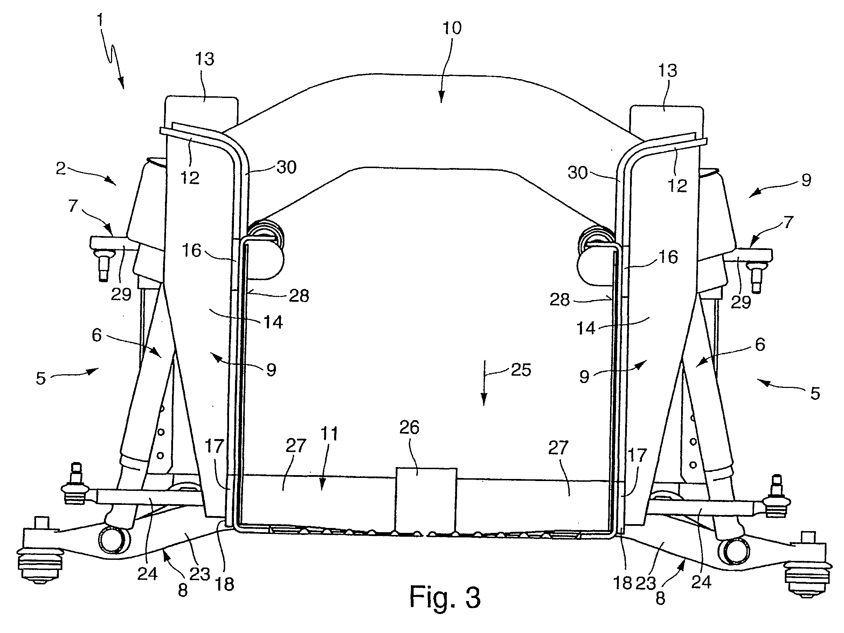

Der obere Querträger 10 erstreckt sich bogenförmig oder bügelförmig quer zur Fahrzeuglängsrichtung 15, vgl. z.B. Fig. 3. Der obere Querträger 10 ist mit Flanschen 30 mit den Seitenkonsolen 9 fest verbunden, insbesondere durch eine Schweißverbindung. Auch der obere Querträger 10 kann als Blechformteil ausgebildet sein.

Gemäß den Fig. 1 und 2 umfaßt das Hinterwagengestell 3 im wesentlichen zwei parallel zur Fahrzeuglängsrichtung 15 verlaufende Längsträger 31. Jeder Längsträger 31 ist aus einem Obergurt 32, einem Untergurt 33 und mehreren Verbindungsstegen 34 zusammengebaut, wobei die Verbindungsstege 34 jeweils Obergurt 32 und Untergurt 33 miteinander verbinden. Des weiteren können, hier nicht gezeigte, Querträger vorgesehen sein, um das Hinterwagengestell 3 zusätzlich zu versteifen. Die Gurte 32 und 33 tragen ein Lochmuster 35, das den Zusammenbau des Hinterwagengestells 3 vereinfacht. Dieses Lochmuster 35 wird außerdem für die Anbindung des Vorderwagengestells 2 genutzt, indem die Anschlußflansche 16 und 17 der Seitenkonsolen 9 ein entsprechendes Lochmuster tragen. Im Bereich der unteren Anschlußflansche 17 erfolgt die Anbindung des Vorderwagengestells 2 an das Hinterwagengestell 3 zweckmäßig so, daß die Anschlußflansche 17 jeweils an einer Außenseite des Untergurts 33 an diesem anliegen, während die Arme 27 des unteren Querträgers 11 jeweils an einer Innenseite des Untergurts 33 an diesem anliegen. Der Untergurt 33 wird dann quasi zwischen dem unteren Anschlußflansch 17 und einem abgewinkelten Abschnitt des Arms 27 eingespannt.

Das Frontwagengestell 4 kann Seitenteile 36 aufweisen, die jeweils aus einem Obergurt 37, einem Untergurt 38 und mehreren Verbindungsstegen 39 zusammengebaut sind. An diesen Seitenteilen 36 erfolgt im Bereich des Untergurts 38 die Lagerung der vorderen Schenkel 22 der unteren Querlenker 8. Zu diesem Zweck ist außen ein Lager 40 angeflanscht. Im Bereich dieses Lagers 40 kann innen ein Versteifungsrohr 41 od.dgl. angeordnet sein, das sich quer zur Fahrzeuglängsrichtung 15 erstreckt und Querkräfte abstützt.

Das Frontwagengestell 4 kann in einem vom Vorderwagengestell 2 abgewandten Abschnitt einen hier nicht näher erläuterten Unterfahrschutz bilden und/oder aufweisen. Alternativ oder zusätzlich kann das Frontwagengestell 4 an seinem vorderen Ende einen Kühlerträger bilden bzw. aufweisen, der hier ebenfalls nicht näher dargestellt ist und beispielsweise einen Kühler für einen Kühlkreis einer Brennkraftmaschine besitzt.

Zweckmäßig werden das Vorderwagengestell 2 und das Frontwagengestell 4 unabhängig vom Hinterwagengestell 3 zusammengebaut und miteinander verbunden, wodurch eine separat vom Hinterwagengestell 3 integrierbare Einheit entsteht. Diese Einheit kann bis zu einem relativ hohen Komplettierungsgrad integriert werden, insbesondere kann die Vorderradlenkung, gegebenenfalls ein Antriebsaggregat, ein Getriebe sowie der komplette Kühlkreis in diese Einheit integriert werden. Von besonderem Vorteil ist dabei, daß insbesondere die Lenkungskomponenten bereits vor der Montage des Vorderwagengestells 2 am Hinterwagengestell 3 eingestellt werden können. Das bedeutet, die Lenkungskomponenten werden auf Grundeinstellungen justiert. Dieser Vorgang ist aufgrund des dafür erforderlichen Platzbedarfs besonders einfach durchführbar, solange das Vorderwagengestell 2 noch nicht am Hinterwagengestell 3 montiert ist. Auf diese Weise werden die aufwendigen Einstellvorgänge von der Endmontage, also dem Anbau des Vorderwagengestells 2 einschließlich des Frontwagengestells 4 am Hinterwagengestell 3, ferngehalten, wodurch sich der Arbeitsablauf optimiert.

Auch die Einbindung des Antriebsaggregats, des Getriebes und des Kühlkreises in die Vormontage hat den Vorteil, daß notwendige Erstbefüllungen mit Hilfsstoffen, wie z.B. Kühlmittel, Motoröl, Getriebeöl, bereits im Rahmen der Vormontage realisierbar sind, wodurch sich die Endmontage vereinfacht.

Bezüglich der Fahrzeuglängsrichtung 15 sind der obere Querträger und der untere Querträger 11 im wesentlichen in einem relativ kurzen Axialabschnitt übereinander angeordnet, wodurch sich in diesem Axialabschnitt ein vollständig geschlossener, ringförmiger Rahmen ausbildet, wodurch das Vorderwagengestell 2 besonders hohe Steifigkeitswerte erhält.

## Patentansprüche

1. Modulartig aufgebautes Fahrgestell (1) für Nutzfahrzeuge, mit einem Vorderwagengestell (2), mit einem damit verbundenen Hinterwagengestell (3) und mit folgenden Merkmalen:
- am Vorderwagengestell (2) ist an jeder Fahrzeugseite eine Einzelradaufhängung (5) mit Feder- und/oder Dämpferbein (6) sowie mit einem oberen Querlenker (7) und einem unteren Querlenker (8) ausgebildet,
- das Vorderwagengestell (2) ist aus zwei jeweils einer Fahrzeugseite zugeordneten Seitenkonsolen (9), einem die beiden Seitenkonsolen (9) oben miteinander verbindenden oberen Querträger (10) und einem die beiden Seitenkonsolen (9) unten miteinander verbindenden unteren Querträger (11) zusammengebaut,
- jede Seitenkonsole (9) ist mit dem Hinterwagengestell (3) verbunden,
- an jeder Seitenkonsole (9) ist einer der oberen Querlenker (7) gelagert,
- am unteren Querträger (11) sind die beiden unteren Querlenker (8) gelagert,
- jede Seitenkonsole (9) weist in Fahrzeuglängsrichtung (15) hintereinander zwei untere Enden (18) auf,
- der untere Querträger (11) verbindet die vier unteren Enden (18) der beiden Seitenkonsolen (9) miteinander
**gekennzeichnet durch** folgende Merkmale:
- an jeder Seitenkonsole (9) ist eines der Feder- und/oder Dämpferbeine (6) abgestützt,
- das Hinterwagengestell (3) weist zwei parallel zur Fahrzeuglängsrichtung (15) verlaufende Längsträger (31) auf, die jeweils aus einem Obergurt (32), einem Untergurt (33) und diese verbindenden Verbindungsstegen (34) zusammengebaut sind,
- jede Seitenkonsole (9) weist einen mit dem Obergurt (32) verbundenen oberen Anschlußflansch (16) und einen mit dem Untergurt (33) verbundenen unteren Anschlußflansch (17) auf.

2. Fahrgestell nach Anspruch 1,
**dadurch gekennzeichnet,**
**dass** die Seitenkonsolen (9) und/oder der obere Querträger (10) und/oder der untere Querträger (11) als Blechformteile ausgebildet sind.

3. Fahrgestell nach Anspruch 1 oder 2,
**dadurch gekennzeichnet,**
**dass** jede Seitenkonsole (9) an ihrem oberen Ende einen nach außen abgewinkelten und auskragenden Deckabschnitt (12) aufweist, an dem das jeweilige Feder- und/oder Dämpferbein (6) abgestützt ist.

4. Fahrgestell nach einem der Ansprüche 1 bis 3,
**dadurch gekennzeichnet,**
**dass** jede Seitenkonsole (9) eine der anderen Seitenkonsole (9) zugewandte Innenseite (28) aufweist und dass die oberen Querlenker (7) jeweils an der Innenseite (28) der jeweiligen Seitenkonsole (9) gelagert sind und sich durch eine in der Seitenkonsole (9) ausgesparte Öffnung (21) nach außen erstrecken.

5. Fahrgestell nach einem der Ansprüche 1 bis 4,
**dadurch gekennzeichnet,**
**dass** die Seitenkonsolen (9) in einer Ansicht in Fahrzeugquerrichtung nach unten offen U-förmig oder A-förmig ausgebildet sind.

6. Fahrgestell nach einem der Ansprüche 1 bis 5,
**dadurch gekennzeichnet,**
**dass** der untere Querträger (11) in einer Ansicht von oben nach unten X-förmig oder H-förmig ausgebildet ist, wobei vier Arme (27) des Querträgers (11) mit den unteren Enden (18) der Seitenkonsole (9) verbunden sind und wobei an einem Mittelstück (26) des Querträgers (11) die unteren Querlenker (8) gelagert sind.

7. Fahrgestell nach einem der Ansprüche 1 bis 6,
**dadurch gekennzeichnet,**
**dass** jede Seitenkonsole (9) zwischen ihren unteren Enden (18) eine Ausnehmung (19) aufweist, durch die hindurch sich der jeweilige untere Querlenker (8) erstreckt.

8. Fahrgestell nach Anspruch 7,
**dadurch gekennzeichnet,**
**dass** sich ein Lenkungsantrieb (24) zur Lenkbetätigung lenkbarer Fahrzeugräder durch die Ausnehmung (19) hindurch erstreckt.

9. Fahrgestell nach Anspruch 7 oder 8,
**dadurch gekennzeichnet,**
**dass** sich eine Antriebswelle zum Antrieb antreibbarer Fahrzeugräder durch die Ausnehmung (19) hindurch erstreckt.

10. Fahrgestell nach einem der Ansprüche 1 bis 9,
**dadurch gekennzeichnet,**
**dass** die Seitenkonsolen (9) an einer vom Hinterwagengestell (3) abgewandten Seite mit einem Frontwagengestell (4) verbunden sind, das einen Unterfahrschutz und/oder einen Kühlerträger bildet und/oder aufweist.

11. Fahrgestell nach Anspruch 10,
**dadurch gekennzeichnet,**
**dass** die unteren Querlenker (8) jeweils als Dreiecksquerlenker mit vorderem Schenkel (22) und hinterem Schenkel (23) ausgebildet sind, wobei der vordere Schenkel (22) am Vorderwagengestell (4) gelagert ist, während der hintere Schenkel (23) am unteren Querträger (11) gelagert ist.

12. Fahrgestell nach einem der Ansprüche 1 bis 11,
**dadurch gekennzeichnet,**
**dass** jede Seitenkonsole (9) an ihrem oberen Ende ein hinteres Fahrerhauslager (13) trägt.

13. Fahrgestell nach einem der Ansprüche 1 bis 12,
**dadurch gekennzeichnet,**
**dass** das Vorderwagengestell (2) eine unabhängig vom Hinterwagengestell (3) montierbare und einstellbare Einheit bildet, die zum Zusammenbau des Fahrgestells (1) mit dem Hinterwagengestell (3) verbunden wird.

14. Fahrgestell zumindest nach Anspruch 10,
**dadurch gekennzeichnet,**
**dass** das Vorderwagengestell (2) zusammen mit dem Frontwagengestell (4) eine unabhängig vom Hinterwagengestell (3) montierbare und einstellbare Einheit bildet, die zum Zusammenbau des Fahrgestells (1) mit dem Hinterwagengestell (3) verbunden wird.

## Claims

1. Chassis (1) for goods vehicles, having a modular structure with a forward chassis section (2), a rear chassis section (3) connected thereto, and having the following characteristics:
- on the forward chassis section (2), on each side of the vehicle an independent wheel suspension (5) is formed which comprises a spring strut and/or damper strut (6), an upper transverse suspension ram (7) and a lower transverse suspension arm (8),
- the forward chassis section (2) consists of two lateral support brackets (9), one on each side of the vehicle, with an upper cross-member (10) connecting the two lateral brackets (9) at the top and a lower cross-member (11) connecting the two lateral brackets (9) at the bottom,
- each lateral bracket (9) is connected to the rear chassis section (3),
- one of the upper transverse suspension arms (7) is mounted on each of the lateral brackets (9),
- the two lower transverse suspension arms (8) are mounted on the lower cross-member (11),
- each lateral bracket (9) has two bottom ends (18) arranged one behind the other in the longitudinal direction (15) of the vehicle,
- the lower cross-member (11) connects the four bottom ends (18) of the two lateral brackets (9) to one another,
**characterised by** the following features:
- one of the spring struts and/or damper struts is supported on each of the lateral brackets (9),
- the rear chassis section (3) comprises two side-members (31) extending parallel to the vehicle's longitudinal direction (15), each side-member consisting of an upper flange strip (32) and a lower flange strip (33) connected to one another by connecting webs (34),
- each lateral bracket (9) comprises an upper connection flange (16) joined to the upper flange strip (32) and a lower connection flange (17) joined to the lower flange strip (33).

2. Chassis according to Claim 1,
**characterised in that**
the lateral brackets (9) and/or the upper cross-member (10) and/or the lower cross-member (11) are formed as shaped sheet components.

3. Chassis according to Claims 1 or 2,
**characterised in that**
at its top end each lateral bracket (9) has a cover section (12) bent and projecting outwards, on which the respective spring strut and/or damper strut (6) is supported.

4. Chassis according to any of Claims 1 to 3,
**characterised in that**
each lateral bracket (9) has an inner side (28) facing towards the other lateral bracket (9) and the upper transverse suspension arms (7) are in each case mounted on the inner side (28) of the respective lateral bracket (9) and project outwards through an opening (21) cut out of the lateral bracket (9).

5. Chassis according to any of Claims 1 to 4,
**characterised in that**
viewed in the direction transverse to the vehicle, the lateral brackets (9) are open towards the bottom in a U-shape or A-shape.

6. Chassis according to any of Claims 1 to 5,
**characterised in that**
viewed from above downwards the lower cross-member (11) is X-shaped or H-shaped, such that four arms (27) of the cross-member (11) are connected to the bottom ends (18) of the lateral brackets (9) and such that the lower transverse suspension arms (8) are mounted on a central portion (26) of the cross-member (11).

7. Chassis according to any of Claims 1 to 6,
**characterised in that**
between its bottom ends (18) each lateral bracket (9) has a recess (19) through which the respective lower transverse suspension arm (8) extends.

8. Chassis according to Claim 7,
**characterised in that**
a steering drive (24) for actuating the steering of the steered vehicle wheels extends through the recess (19).

9. Chassis according to Claims 7 or 8,
**characterised in that**
a driveshaft for driving the vehicle's drive wheels extends through the recess (19).

10. Chassis according to any of Claims 1 to 9,
**characterised in that**
on their side facing away from the rear chassis section (3) the lateral brackets (9) are connected to a front chassis section (4), which forms and/or comprises an underride guard and/or a radiator support.

11. Chassis according to Claim 10,
**characterised in that**
the lower transverse suspension arms (8) are each formed as wishbone suspension arms with a forward limb (22) and a rear limb (23), the forward limb (22) being mounted on the forward chassis section (4) while the rear limb (23) is mounted on the lower cross-member (11).

12. Chassis according to any of Claims 1 to 11,
**characterised in that**
at its upper end each lateral bracket (9) supports a rear driver's cabin mounting (13).

13. Chassis according to any of Claims 1 to 12,
**characterised in that**
the forward chassis section (2) forms a unit that can be assembled and positioned independently of the rear chassis section (3), this being connected to the said rear chassis section (3) to form the chassis (1).

14. Chassis at least according to Claim 10,
**characterised in that**
the forward chassis section (2) together with the front chassis section (4) form a unit that can be assembled and positioned independently of the rear chassis section (3), this being connected to the said rear chassis section (3) to form the chassis (1).

## Revendications

1. Châssis modulaire (1) de véhicules utilitaires avec un cadre avant (2) et un cadre arrière (3) relié au premier, présentant les caractères suivants :
- le cadre avant (2) comporte de chaque côté du véhicule une suspension à roues indépendantes (5) avec jambe de suspension et/ou jambe d'amortisseur (6), et avec un bras de suspension transversal supérieur (7) et un bras de suspension transversal inférieur (8),
- le cadre avant (2) est assemblé par deux consoles latérales (9) attribuées respectivement à un côté du véhicule, par une traverse supérieure (10) reliant en haut les deux consoles latérales (9) et par une traverse inférieure (11) reliant en bas les deux consoles latérales (9),
- chaque console latérale (9) est reliée au cadre arrière (3),
- sur chaque console latérale (9) est positionné un des bras de suspension transversaux supérieurs (7),
- les deux bras de suspension transversaux inférieurs (8) sont positionnés sur la traverse inférieure (11),
- chaque console latérale (9) comporte dans le sens longitudinal du véhicule (15) deux extrémités inférieures (18) successives,
- la traverse inférieure (11) relie entre elles les quatre extrémités inférieures (18) des deux consoles latérales (9),
**caractérisé par** les éléments suivants :
- chaque jambe de suspension et/ou jambe d'amortisseur (6) s'appuie sur la console latérale (9) respective,
- le cadre arrière (3) comporte deux longerons (31) installés parallèlement au sens longitudinal (15) du véhicule et constitués chacun d'une semelle supérieure (32), d'une semelle inférieure (33) et d'âmes d'assemblage (34) raccordant ces dernières,
- chaque console latérale (9) comporte un flasque de raccordement supérieur (16) relié à la semelle supérieure (32) et un flasque de raccordement inférieur (17) relié à la semelle inférieure (33).

2. Châssis selon la revendication 1, **caractérisé en ce que** les consoles latérales (9) et/ou la traverse supérieure (10) et/ou la traverse inférieure (11) sont des pièces façonnées en tôle.

3. Châssis selon la revendication 1 ou 2, **caractérisé en ce que** chaque console latérale (9) comporte en son extrémité supérieure un secteur de recouvrement (12) faisant saillie et coudé vers l'extérieur, sur lequel s'appuie la jambe de suspension et/ou la jambe d'amortisseur (6) respective.

4. Châssis selon l'une quelconque des revendications 1 à 3, **caractérisé en ce que** chaque console latérale (9) comporte un côté intérieur (28) se trouvant en face de l'autre console latérale (9), et que les bras de suspension transversaux supérieurs (7) sont logés sur le côté intérieur (28) respectif de la console latérale (9) respective et s'étendent vers l'extérieur en passant dans une ouverture (21) pratiquée dans la console latérale (9).

5. Châssis selon l'une quelconque des revendications 1 à 4, **caractérisé en ce que** les consoles latérales (9) présentent une forme en U ouvert vers le bas ou en A, pour un observateur regardant en direction transversale du véhicule.

6. Châssis selon l'une quelconque des revendications 1 à 5, **caractérisé en ce que** la traverse inférieure (11) présente une forme en X ou H, pour un observateur regardant de haut vers le bas, quatre bras (27) de ladite traverse (11) étant reliés aux extrémités inférieures (18) de la console latérale (9) et les bras de suspension transversaux inférieurs (8) étant positionnés sur un élément central (26) de la traverse (11).

7. Châssis selon l'une quelconque des revendications 1 à 6, **caractérisé en ce que** chaque console latérale (9) comporte entre ses extrémités inférieures (18) un dégagement (19) à travers duquel s'étend le bras de suspension transversal inférieur (8) respectif.

8. Châssis selon la revendication 7, **caractérisé en ce qu'**une transmission de direction (24) destinée à la commande de la direction de roues de véhicule dirigeables s'étend à travers le dégagement (19).

9. Châssis selon la revendication 7 ou 8, **caractérisé en ce qu'**un arbre de transmission destiné à la transmission de roues de véhicule pouvant être commandées s'étend à travers le dégagement (19).

10. Châssis selon l'une quelconque des revendications 1 à 9, **caractérisé en ce que** les consoles latérales (9) sont reliées à un cadre frontal (4) sur le côté opposé au cadre arrière (3), ledit cadre frontal formant et/ou comportant un dispositif anti-encastrement et/ou un support de radiateur.

11. Châssis selon la revendication 10, **caractérisé en ce que** les bras de suspension transversaux inférieurs (8) sont constitués respectivement par des bras triangulaires avec bras avant (22) et bras arrière (23), ledit bras avant (22) étant positionné sur le cadre avant (4), alors que ledit bras arrière (23) est positionné sur la traverse inférieure (11).

12. Châssis selon l'une quelconque des revendications 1 à 11, **caractérisé en ce que** chaque console latérale (9) supporte en son extrémité supérieure un support arrière de cabine de conduite (13).

13. Châssis selon l'une quelconque des revendications 1à 12, **caractérisé en ce que** le cadre avant (2) constitue une unité pouvant être montée et réglée indépendamment du cadre arrière (3), ladite unité étant reliée au cadre arrière (3) lors de l'assemblage du châssis (1).

14. Châssis selon au moins la revendication 10, **caractérisé en ce que** le cadre avant (2) constitue avec le cadre frontal (4) une unité pouvant être montée et réglée indépendamment du cadre arrière (3), ladite unité étant reliée au cadre arrière (3) lors de l'assemblage du châssis (1).
